# EUROPÄISCHE PATENTSCHRIFT

(11) **EP 3 395 496 B1**
(45) Veröffentlichungstag und Bekanntmachung des Hinweises auf die Patenterteilung: **13.05.2020**
(21) Anmeldenummer: 18166356.8
(22) Anmeldetag: 09.04.2018
(51) Int. Cl.: B23Q 1/00

(54) **SPANNEINHEIT MIT SPANNMODUL UND SPANNSYSTEM**
TENSIONING UNIT WITH TENSIONING MODULE AND TENSIONING SYSTEM
UNITÉ DE SERRAGE POURVUE DE MODULE DE SERRAGE ET SYSTÈME DE SERRAGE

(30) Priorität: 07.04.2017 DE 102017107571
(43) Veröffentlichungstag der Anmeldung: 31.10.2018
(73) Patentinhaber: Schunk GmbH & Co. KG Spann- und Greiftechnik, 74348 Lauffen am Neckar (DE)
(72) Erfinder: Schwendele, Florian, 88525 Dürmentingen (DE)
(74) Vertreter: DREISS Patentanwälte PartG mbB

(56) Entgegenhaltungen:
- EP-A1- 1 563 958
- EP-A2- 0 069 230
- EP-A2- 1 048 397
- DE-U1-202010 002 432

## Beschreibung

Die Erfindung betrifft eine Spanneinheit mit einem Spannmodul, insbesondere ein Spannmodul eines Nullpunktspannsystems, wobei das Spannmodul eine Spannaufnahme und in eine Verriegelungslage verlagerbare Spannmitteln derart aufweist, dass ein in die Spannaufnahme einführbares Spannelement in der Verrieglungslage von den Spannmitteln in die Spannaufnahme gezogen und dort verriegelt wird (siehe z.B. DE202010002432U1). Dadurch kann das Spannelement, bzw. ein das Spannelement aufweisender Werkstückträger oder ein das Spannelement aufweisendes Werkstück sicher positionsgenau wiederholbar am Spannmodul verriegelt werden.

Bei Nullpunktspannsystemen handelt es sich um Spannsysteme, mit denen zu bearbeitende Werkstücke oder Werkstückträger wiederholbar positionsgenau gespannt werden können. Dabei ist denkbar, mehrere Spannmodule auf einem gemeinsamen Träger, beispielsweise auf einem Spanntisch oder einer Spannplatte vorzusehen, um insbesondere auch größere Werkstücke mittels mehreren Spannelementen zu spannen.

In der Verriegelungslage der Spannmittel wirkt das Spannelement mit dem Spannmittel so zusammen, dass das Spannelement in axialer Richtung in bzw. gegen das Spannmodul gezogen wird. Spannelemente, die hierbei Verwendung finden können, sind beispielsweise aus der DE 10 2010 007 924 A1, der DE 10 2013 222 952 A1 oder der DE 10 2010 013 912 A1 bekannt. Solche Spannelemente können insbesondere konusflächige Angriffsabschnitte aufweisen, gegen welche die Spannmittel der Spannmodule wirken.

Die Spannaufnahme kann dabei nicht nur als ringartige Aufnahme zur Aufnahme eines bolzenartigen Spannelements (Bolzenspannaufnahme), sondern auch als bolzenartige Aufnahme zur Aufnahme eines Spannelements in Form einer Bohrung/eines Spannringes (Bohrungsspanner) ausgebildet sein.

Beim Spannen eines Werkstücks oder eines Werkstückträgers mit mehreren, insbesondere drei oder vier Spannmodulen entsteht regelmäßig auf Grund von Fertigungstoleranzen, von thermischen Ausdehnungen des Werkstücks oder des Werkstückträgers und/oder von frei werdenden Eigenspannungen eine mechanische Überbestimmung, was zu weiteren mechanischen Spannungen im Werkstück, im Werkstückträger und/oder im gesamten Spannsystem führen kann. Dabei ist bei der Bearbeitung von größeren Werkstücken oder der Anordnung von größeren Werkstücken an größeren Werkstückträgern gerade eine thermische Ausdehnung problematisch. Eine Erwärmung des Werkstücks kann insbesondere auf Grund einer entsprechenden Bearbeitung erfolgen. Die thermische Ausdehnung kann dabei im 1/10 bis 1/1 Millimeterbereich liegen. Das kann zur Folge haben, dass insbesondere unter Verwendung von mehr als einem Spannmodul die zugehörigen Spannelemente dann nicht zentrisch in die Spannmodule einführbar sind oder dass es zu mechanischen Spannungen im Werkstückträger, im Werkstück, oder zwischen den Spannmodulen kommt. Neben einem Höhenversatz kann ein Radialversatz auftreten, der zu einer mechanischen Überbestimmung führt, woraus mechanische Spannungen im Werkstückträger, im Werkstück, oder zwischen den Spannmodulen entstehen können.

Aus der DE 20 2009 006 429 U1 ist es beispielsweise in diesem Zusammenhang bekannt, eine Höhenanpassung mittels entsprechend hohen Ausgleichsadaptern zu ermöglichen. Die EP 2 353 774 B1 schlägt vor, einen Höhenausgleich an der Spannvorrichtung vorzusehen. Aus der DE 20 2008 017 630 U1 sind Spannmodule bekannt, die einen radialen Ausgleich ermöglichen. Aus der DE 10 2016 108 895 A1 der Anmelderin ist eine weitere, nachveröffentlichte Spanneinheit bekannt, die ebenfalls einen radialen Stichmaßausgleich ermöglichen. Aus der DE 10 2013 201 310 A1 sind Spannelemente bekannt, die zwar eine Spannfunktion, aber keine Niederzugfunktion aufweisen.

Der vorliegenden Erfindung liegt die Aufgabe zu Grunde, Spanneinheiten bereitzustellen, die Spannmodule aufweisen, sowie ein zugehöriges Spannsystem bereitzustellen, mit denen, beziehungsweise bei dem mehrere Spannelemente in zugehörigen Spannaufnahmen gespannt werden können, wobei eine mechanische Überbestimmung reduziert werden soll. Die Spanneinheiten sollen dabei vergleichsweise einfach aufgebaut sein und wenig Bauraum beanspruchen.

Diese Aufgabe wird durch eine Spanneinheit mit den Merkmalen des Anspruchs 1 gelöst. Es vorgesehen, dass ein Schwenkeinsatz vorgesehen ist, der ein Verschwenken des Spannmoduls um eine quer zur Mittelachse des Schwenkeinsatzes verlaufende Schwenkachse ermöglicht und dass Festsetzmittel vorgesehen sind, die in eine Festsetzlage verlagerbar sind, in der der Schwenkeinsatz festgesetzt ist.

Die erfindungsgemäße Spanneinheit hat folglich den Vorteil, dass sie einen Lageausgleich um eine Schwenkachse ermöglicht. Der Lageausgleich kann dabei im Bereich von wenigen Grad liegen, insbesondere im Bereich von 0,5° bis 3° und vorzugsweise im Bereich von ± 2°. Insbesondere kann mit einer solchen Spanneinheit eine Grobbearbeitung des gespannten Werkstücks erfolgen. Auf Grund der Grobbearbeitung kann es zu Eigenspannungen im Werkstück kommen; sei es auf Grund der Bearbeitung oder auf Grund von thermischen Einflüssen während der Bearbeitung. Nach einer Grobbearbeitung können die Festsetzmittel gelöst werden, so dass das Spannmodul zum Lageausgleich um eine quer zur Mittellängsachse verlaufende Schwenkachse verschwenkt werden kann, wodurch ein Spannungsabbau im Werkstück erfolgen kann. Nach erfolgtem Lageausgleich können die Festsetzmittel wieder aktiviert werden, so dass nach erfolgtem Lageausgleich der Schwenkeinsatz wieder festgesetzt wird. Während des beschriebenen Vorgangs kann das Spannmodul fest am Spannelement verriegelt bleiben. Lediglich das Spannmodul beziehungsweise der Schwenkeinsatz verändert seine Lage.

Das Festsetzen des Schwenkeinsatzes beziehungsweise des Spannmoduls im Grundgehäuse kann dabei in jeder beliebigen Position erfolgen, das heißt also im verschwenkten und unverschwenkten Zustand.

Eine vorteilhafte Ausführungsform der Erfindung umfasst eine Ausgleichseinheit mit einem Grundgehäuse, einer Schwenkaufnahme und dem Schwenkeinsatz, wobei das Spannmodul am Schwenkeinsatz anordenbar ist oder diesen bildet, wobei der Schwenkeinsatz gegenüber der Schwenkaufnahme um eine quer zur Mittelachse der Ausgleichseinheit verlaufende Schwenkachse verschwenkbar angeordnet ist, und wobei Festsetzmittel vorgesehen sind, die in eine Festsetzlage verlagerbar sind, in der der Schwenkeinsatz am Grundgehäuse festgesetzt ist. Vorteilhaft ist, wenn die Schwenkaufnahme einen kegelstumpfartige Aufnahmeabschnitt und wenn der Schwenkeinsatz einen in die Schwenkaufnahme einsetzbaren Schwenkbaschnitt aufweist. Hierdurch kann ein Verschwenken des Schwenkeinsatzes gegenüber der Schwenkaufnahme erreicht werden. Die miteinander zum Anliegen kommenden Oberflächen der Schwenkaufnahme und/oder des Schwenkeinsatzes können dabei kugeloberflächenartig oder ballig ausgebildet sein, so dass ein Lageausgleich, also beim Verschwenken des Schwenkeinsatzes, der Schwenkeinsatz flächig - und nicht nur linien- oder punktförmig - an der Schwenkaufnahme zum Anliegen kommt.

Die Festsetzmittel zum Festsetzen des Schwenkeinsatzes an der Schwenkaufnahme beziehungsweise am Grundgehäuse können einen den Schwenkeinsatz und die Schwenkaufnahme durchgreifenden Festsetzstift mit einem Kopf vorsehen, wobei der Schwenkeinsatz einen Boden mit einer Aussparung, durch die der Stift hindurchragt und eine Kopfaufnahme für den Kopf aufweist, wobei die Anordnung so ist, dass der Festsetzstift in der Verriegelungslage den Schwenkeinsatz gegen das Grundgehäuse festsetzt. Der Schwenkeinsatz wird folglich vom Festsetzstift in die Schwenkaufnahme eingezogen und gegen die Schwenkaufnahme beaufschlagt.

Um ein ausreichendes Verschwenken des Schwenkeinsatzes zu ermöglichen, ist es vorteilfhaft, wenn der Kopf als Senk- oder Senkrundkopf ausgebildet ist und/oder wenn die Kopfaufnahme eine zum Kopf komplementäre Anlagefläche aufweist. Hierdurch kann ein flächiges Anliegen des Kopfes an der Kopfaufnahme gewährleistet werden, auch dann, wenn der Schwenkeinsatz gegenüber der Schwenkaufnahme verschwenkt angeordnet ist. Um einen ausreichenden Niederzug des Festsetzstiftes zu erreichen ist es vorteilhaft, wenn dieser an seinem dem Kopf abgewandten Ende einen sich in radialer Richtung erstreckenden Flanschabschnitt aufweist, der mit im Grundgehäuse in radialer Richtung verlagerbaren Verriegelungselementen derart zusammenwirkt, dass beim Verlagern der Verriegelungselemente in eine Festsetzposition der Festsetzstift in axialer Richtung beaufschlagt wird und der Schwenkeinsatz dadurch gegen das Grundgehäuse festgesetzt wird. Die Verriegelungselemente sind dabei so ausgebildet, dass eine Kraftumlenkung stattfindet, durch welche eine radiale Bewegung der Verriegelungselemente in eine axiale Bewegung des Festsetzstiftes umgelenkt wird.

Die Verriegelungselemente können dabei als Spannschieber ausgebildet sein, wobei die Spannschieber auf der radial inneren Seite Einzugsschrägen aufweisen, wobei zwischen den Einzugsschrägen und dem Flanschabschnitt ein um den Festsetzstift angeordnetes Ringelement mit zu dem Einzugsschrägen komplementär verlaufenden Gegenschrägen vorgesehen ist, und wobei das Ringelement eine senkrecht zur Mittellängsachse des Grundgehäuses verlaufende Anlagefläche aufweist, die mit dem Flanschabschnitt des Festsetzstiftes zusammenwirkt. Durch radiales Verlagern der Verriegelungselemente wird folglich das Ringelement auf Grund den Einzugsschrägen und den Gegenschrägen in axialer Richtung betätigt. Da das Ringelement mit dem Flanschabschnitt zusammenwirkt, wird dieser letztlich ebenfalls axial verlagert.

Zur Betätigung der Verriegelungselemente ist denkbar, dass im Grundgehäuse ein Kolbenraum und ein im Kolbenraum verlagerbarer, wenigstens einseitig druckbeaufschlagbarer Kolben vorgesehen ist, wobei der Kolben über eine Schrägführung mit den Verriegelungselementen so bewegungsgekoppelt ist, dass beim axialen Verstellen des Kolbens die Verriegelungselemente in axialer Richtung verlagert werden. Die Anordnung ist folglich derart, dass ein axiales Bewegen des Kolbens zu einer radialen Bewegung der Verriegelungselemente führt, wobei die radiale Bewegung der Verriegelungselemente zu einer axialen Bewegung des Ringelements beziehungsweise des Flanschabschnitts des Festsetzstiftes führt. Über die axiale Bewegung des Festsetzstiftes erfolgt die Festsetzung des Schwenkeinsatzes in der Schwenkaufnahme des Grundgehäuses.

Ferner ist vorteilhaft, wenn das Grundgehäuse eine senkrecht zu dessen Mittellängsachse verlaufende Auflage für die Schwenkaufnahme aufweist. Dadurch kann neben einem Lageausgleich um einen Schwenkwinkel auch ein radialer Stichmaßausgleich erzielt werden. Die Schwenkaufnahme ist dabei gegenüber dem Grundgehäuse in radialer Richtung verlagerbar, wobei die in radialer Richtung verlagerbare Schwenkaufnahme dann mit den Festsetzmitteln, zusammen mit dem Schwenkeinsatz, am Grundgehäuse festsetzbar ist. Dadurch kann folglich nicht nur ein Lageausgleich um einen Schwenkwinkel, sondern auch ein radialer Stichmaßausgleich bereitgestellt werden. Der Festsetzstift ist dann derart im Gehäuse angeordnet, dass eine radiale Verlagerung der Schwenkaufnahme samt Festsetzstift ermöglich ist. Insbesondere weist der Festsetzstift in seiner mittleren Lage einen radialen Abstand zum Grundgehäuse beziehungsweise von Komponenten des Gehäuses sowie zum Ringelement auf. Auf Grund der beschriebenen Anordnung und Festsetzung des Festsetzstiftes ist es möglich, dass der Schwenkeinsatz zum Lageausgleich verschwenkbar ist und dass die Schwenkaufnahme samt Schwenkeinsatz zum Stichmaßausgleich in radialer Richtung verlagerbar ist. Der Stichmaßausgleich kann dabei vorzugsweise im Bereich von ± 10 mm und weiter im Bereich von ± 6 mm liegen.

Die eingangs genannte Aufgabe wird auch gelöst durch ein Spannsystem mit zwei oder mehreren Spanneinheiten, wobei eine der Spanneinheiten als starre Spanneinheit ausgebildet ist, die keinen Ausgleich in eine radiale Richtung oder in eine Schwenklage zulässt, und wobei wenigstens eine weitere Spanneinheit als erfindungsgemäße lageausgleichende Spanneinheit ausgebildet ist, die zumindest einen Lageausgleich in eine Schwenklage und vorteilhafterweise auch einen Stichmaßausgleich in radialer Richtung ermöglicht.

Dies hat den Vorteil, dass größere Bauteile mit mehreren Spanneinheiten zur Vorbearbeitung gespannt werden können. Nach einer Vorbearbeitung ist denkbar, die Festsetzmittel zu lösen, so dass im Werkstück vorhandene Spannungen abgebaut werden können. Auf Grund des Lageausgleichs um eine Schwenklage kann dann das Werkstück positionsgenau erneut gespannt werden, wobei durch den Lageausgleich innere Spannungen im Werkstück reduziert werden können.

Dabei ist denkbar, dass auch weitere Spanneinheiten vorgesehen sein können, beispielsweise eine ausgleichende Spanneinheit, die einen Ausgleich in lediglich eine radiale Richtung zulässt und/oder eine schwimmende Spanneinheit, die einen Ausgleich in sämtliche radialen Richtungen zulässt.

Eine weitere ausgleichende Spanneinheit, die einen Ausgleich in lediglich eine radiale Richtung zulässt, hat den Vorteil, dass das zu spannende Werkstück oder der zu spannende Werkstückträger zwischen den Spannpunkten der starren Spanneinheit und der ausgleichenden Spanneinheiten lediglich im Hinblick auf den Abstand dieser beiden Spanneinheiten variieren kann. Dadurch kann ein Variieren des Stichmaßes zwischen diesen beiden Spannaufnahmen der Spanneinheiten in Richtung zwischen den Spannelementen ausgeglichen werden.

Eine weitere schwimmende Spanneinheit, die einen radialen Ausgleich in alle Richtungen zulässt, kann als dritte Spanneinheit des Spannsystems vorgesehen sein. Je nach Geometrie des Werkstücks oder des zu spannenden Trägers kann folglich über die dritte Spanneinheit ein sicheres Spannen erfolgen, wobei diese Spanneinheit in Richtung der anderen beiden Spanneinheiten sich ändernde Stichmaße ausgleichen kann.

Eine weitere, als vierte Spanneinheit vorgesehene, erfindungsgemäße lageausgleichende Spanneinheit, hat den Vorteil, dass zudem ein Lageausgleich um eine Schwenkachse und vorteilhafterweise zusätzlich ein weiterer Stichmaßausgleich in radialer Richtung ermöglicht wird.

Als besonders vorteilhaft hat sich also ein Spannsystem herausgestellt, das an einem Werkstück oder einem Spanntisch eine starre Spanneinheit, eine ausgleichende Spanneinheit, eine schwimmende Spanneinheit und eine erfindungsgemäße, lageausgleichende Spanneinheit vorsieht. Die ausgleichende Spanneinheit gleicht folglich das Stichmaß zwischen der starren Spanneinheit und der ausgleichenden Spanneinheit aus. Die weitere, schwimmende Spanneinheit kann die Stichmaße zwischen der starren Spanneinheit zur schwimmenden Spanneinheit sowie von der ausgleichenden Spanneinheit zur schwimmenden Spanneinheit ausgleichen. Vorteilhafterweise ist die Anordnung derart, dass die starre Spanneinheit und die ausgleichende Spanneinheit als diejenigen Spanneinheiten gewählt werden, die den größten Abstand zueinander vorsehen. Die anderen Spanneinheiten, die einen geringeren Abstand zur starren Spanneinheit aufweisen, sind dann vorzugsweise als schwimmende bzw. als erfindungsgemäße Spanneinheiten ausgebildet. Dadurch kann insgesamt ein sicheres Spannen des Werkstücks beziehungsweise des Werkstückträgers mit mehreren Spanneinheiten realisiert werden.

Je nach Anforderung ist auch denkbar, dass eine oder mehrere Spanneinheiten einen axialen Höhenausgleich vorsehen, um ungewünschte Eigenspannungen im System auf Grund sich ergebender unterschiedlicher Höhen zu vermeiden.

Weitere Ausgestaltungen und Einzelheiten der Erfindung sind den Figuren und der nachfolgenden Beschreibung zu entnehmen, anhand derer zwei Ausführungsbeispiele der Erfindung näher beschrieben und erläutert sind. Es zeigen:

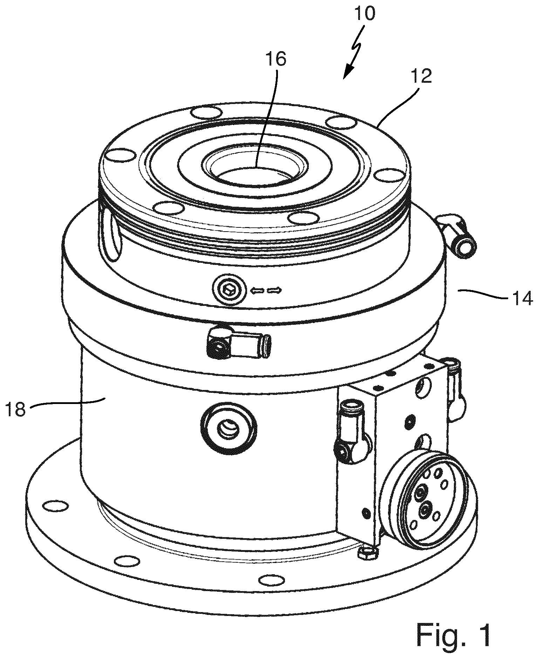

- Figur 1: eine perspektivische Ansicht einer erfindungsgemäßen Spanneinheit und
- Figur 2: einen Teillängsschnitt durch die Spanneinheit gemäß Figur 1.

In den Figuren ist eine Spanneinheit 10 gezeigt, die ein Spannmodul 12 sowie eine Ausgleichseinheit 14 umfasst. Das Spannmodul 12 sieht eine Spannaufnahme 16 vor, in die ein Spannelement, beispielsweise ein Spannbolzen, einführbar ist. Anstelle einer solchen Bolzenspannaufnahme ist auch denkbar, dass die Spannaufnahme bolzenartig zur Aufnahme einer Bohrung, also als Bohrungsspanner, ausgebildet ist.

Im Spannmodul 12 sind - in den Figuren nicht dargestelltverlagerbare Spannmittel vorgesehen, mit denen das in die Spannaufnahme eingeführte Spannelement in und gegen die Spannaufnahme gezogen und dort verriegelbar ist. Die Spannmittel können dabei beispielsweise als Kugeln oder auch als Spannschieber ausgebildet sein, wie es beispielsweise in der DE 10 2010 007 924 A1 beschrieben und gezeigt ist.

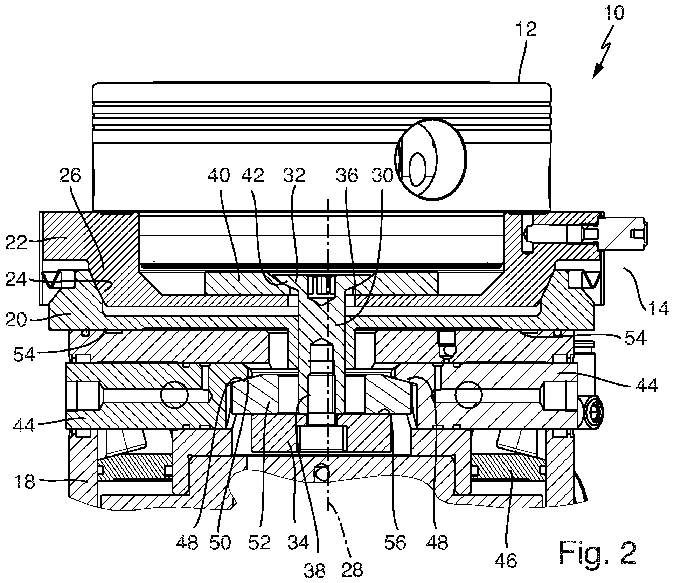

Wie aus Figur 2 deutlich wird, weist die Ausgleichseinheit 14 ein Grundgehäuse 18, eine Schwenkaufnahme 20 sowie einen Schwenkeinsatz 22 auf. Gemäß Figur 2 ist das Spannmodul 12 am Schwenkeinsatz beispielsweise durch Verschraubungen befestigt. Denkbar ist auch, dass der Schwenkeinsatz 22 vom Spannmodul 12 beziehungsweise dessen Gehäuse, gebildet wird.

Die Schwenkaufnahme 20 weist einen kegelstumpfförmigen Aufnahmeabschnitt 24 auf. Der Schwenkeinsatz 22 weist einen hierzu komplementär ausgebildeten Schwenkabschnitt 26 auf, der in den Aufnahmeabschnitt 24 eingesetzt ist. Die Ausbildung des Aufnahmeabschnitts 24 und des Schwenkabschnitts 26 ist dabei derart, dass der Schwenkeinsatz 22 gegenüber der Schwenkaufnahme 20 um einen quer zur Mittellängsachse 28 des Grundgehäuses 18 verlaufende Schwenkachse im zum Lageausgleich Bereich von + 2° bis ± 3° verschwenkbar ausgebildet ist.

Zur flächigen Anlage des Schwenkabschnitts 26 am Aufnahmeabschnitt 24 ist vorteilhaft, wenn die miteinander zusammenwirkenden Oberflächen ballig oder kugeloberflächenartig ausgebildet sind.

Zum Festsetzen des Schwenkeinsatzes 22 in der jeweiligen Schwenklage ist ein Festsetzmittel in Form eines Festsetzstifts 30 vorgesehen, der einen Kopf 32 und einen auf der dem Kopf 32 abgewandten Seite sich in radialer Richtung erstreckenden Flanschabschnitt 34 aufweist. Wie aus dem Schnitt gemäß Figur 2 deutlich wird, ist der Kopf 32 als Senkrundkopf mit einer auf seiner Unterseite gewölbten Oberfläche ausgebildet. Der Festsetzstift 30 ist entlang der Mittellängsachse 28 verlaufend angeordnet und durchgreift eine Mittenaussparung 36 des Schwenkeinsatzes 22. In axialer Richtung ist der Festsetzstift 30 in einer Führungsausnehmung 38 der Schwenkaufnahme 20 geführt. Wie ebenfalls aus Figur 2 deutlich wird, sieht der Schwenkeinsatz 22 eine Kopfaufnahme 40 vor, die eine zur senkrundkopfartigen Ausbildung des Kopfes 32 komplementäre Anlage 42 aufweist. Dadurch kann erreicht werden, dass der Schwenkeinsatz 22 um eine quer zur Mittellängsachse 28 verlaufende Schwenkachse verschwenkbar ist, und dennoch der Festsetzstift 30 in Richtung der Mittellängsachse 28 zur Festsetzung des Schwenkeinsatzes 22 beaufschlagbar ist.

Zum Festsetzen des Schwenkeinsatzes 22 wird der Schwenkeinsatz 22 mittels dem Festsetzstift 30 gegen die Schwenkaufnahme 20 beaufschlagt. Dazu sind im Grundgehäuse 18 in radialer Richtung verlagerbare Verriegelungselemente 44 in Form von Spannschiebern vorgesehen. Die Verriegelungselemente 44 sind mit einem doppelseitig druckbeaufschlagbaren Ringkolben 46 derart bewegungsgekoppelt, dass beim axialen Verfahren des Ringkolbens 46 die Verriegelungselemente 44 in radialer Richtung bewegt werden. Die Bewegungskopplung kann beispielsweise über einen bekannten Schrägzug, der in den Figuren nicht dargestellt ist, erreicht werden. Zur Verlagerung des Ringkolbens 46 werden die den Ringkolben begrenzenden Druckräume wechselseitig beaufschlagt.

Wie aus Figur 2 deutlich wird, weisen die Verriegelungselemente 44 an ihrem radial inneren Ende Einzugsschrägen 48 auf, die mit dazu komplementär verlaufenden Gegenschrägen 50 eines den Festsetzstift 30 umgebenden Ringelements 52 zusammenwirken. Auf der der Gegenschrägen abgewandten Unterseite des Ringelements 52 wirkt dieses gegen den Flanschabschnitt 34. Die Einzugsschrägen 48 und die Gegenschrägen 50 sind dabei so angeordnet, dass ein nach radial innen Bewegen der Verriegelungselemente 44 das Ringelement 52 sowie der Flanschabschnitt 34 nach axial unten bewegt werden, wodurch über den Festsetzstift der Schwenkeinsatz 22 gegen die Schwenkaufnahme 20 festgesetzt wird. Das Ringelement 52 weist dazu auf seiner dem Flanschabschnitt 34 zugewandten Seite eine Anlagefläche 56 auf, die mit dem Flanschabschnitt 34 zusammenwirkt.

Wie ebenfalls aus Figur 2 deutlich wird, weist das Grundgehäuse 18 auf seiner der Schwenkaufnahme 20 zugewandten Oberseite eine senkrecht zur Mittellängsachse 28 verlaufende Anlage 54 für die Schwenkaufnahme 20 derart auf, dass die Schwenkaufnahme 20 gegenüber dem Grundgehäuse 18 in radialer Richtung verlagerbar ist. Dadurch kann ein radialer Stichmaßausgleich bereitgestellt werden. Die Mittenaussparung 36, das Grundgehäuse 18, das Ringelement 52 und der Flanschabschnitt 34 sind dabei derart ausgebildet, dass eine radiale Bewegung der Führungsausnehmung 38 und des Festsetzstifts 30 samt Flanschabschnitt 34 im Grundgehäuse möglich ist. Der Stichmaßausgleich kann dabei insbesondere im Bereich von 5 mm bis 10 mm liegen.

Auf Grund des radialen Stichmaßausgleiches kann folglich der Festsetzstift 30 parallel zur Mittellängsachse 28 des Grundgehäuses verschoben werden. Dadurch wird die relative Lage des Flanschabschnitts 34 gegenüber dem Ringelement 52 ebenfalls verändert. Dennoch kann durch Verlagern der Verriegelungselement 44 in die Verriegelungslage der Festsetzstift 30 nach axial unten beaufschlagt werden, so dass der Schwenkeinsatz 22 zum Lageausgleich um eine Schwenkachse verschwenkt ist und zudem die Schwenkaufnahme 20 zum Stichmaßausgleich in radialer Richtung verschoben ist.

Die erfindungsgemäße, lageausgleichende Spanneinheit 10 kann vorteilhafterweise in einem Spannsystem, das weitere Spanneinheiten aufweist, Verwendung finden. Als weitere Spanneinheiten kommen insbesondere eine starre Spanneinheit, ohne Radialausgleich, in Betracht. Ferner kommt eine ausgleichende Spanneinheit, die einen Ausgleich in lediglich eine radiale Richtung zulässt in Betracht, sowie eine schwimmende Spanneinheit, die einen Ausgleich in sämtliche radialen Richtungen zulässt. Insgesamt kann dadurch ein Werkstück mit vier unterschiedlichen Spanneinheiten optimal gespannt werden. Denkbar ist, dass das Werkstück zunächst gespannt wird. Danach erfolgt in einem weiteren Schritt eine Grobbearbeitung des Werkstücks. Nach der Grobbearbeitung werden die Festsetzmittel an den einzelnen Spanneinheiten gelöst, so dass im Werkstück auftretende Spannungen beseitigt werden können. Danach können die einzelnen Festsetzmittel wieder in ihre Festsetzlage gebracht werden, wodurch das Werkstück positionsgenau und funktionssicher, und im Wesentlichen ohne Eigenspannungen, gespannt werden kann. Daraufhin kann das Werkstück einer Feinbearbeitung unterzogen werden. Dabei ist es nicht erforderlich, dass die Spannelemente in den Spannmodulen gelöst werden, was zu einem Positionsverlust des Werkstücks führen würde.

## Patentansprüche

1. Spanneinheit (10) mit einem Spannmodul (12), wobei das Spannmodul (12) eine Spannaufnahme (16) und in eine Verriegelungslage verlagerbare Spannmittel aufweist, wobei ein mit der Spannaufnahme (16) zusammenwirkendes Spannelement in der Verrieglungslage von den Spannmitteln in die Spannaufnahme (16) gezogen und dort verriegelt wird, **dadurch gekennzeichnet, dass** ein Schwenkeinsatz (22) vorgesehen ist, der ein Verschwenken des Spannmoduls um eine quer zur Mittelachse (28) des Schwenkeinsatzes (22) verlaufende Schwenkachse ermöglicht und dass lösbare Festsetzmittel (30) vorgesehen sind, die in eine Festsetzlage verlagerbar sind, in der der Schwenkeinsatz (22) festgesetzt ist.

2. Spanneinheit (10) nach Anspruch 1, **dadurch gekennzeichnet, dass** eine Ausgleichseinheit (14) mit einem Grundgehäuse (18), einer Schwenkaufnahme (20) und dem Schwenkeinsatz (22) vorgesehen ist, wobei das Spannmodul (12) am Schwenkeinsatz (22) anordenbar ist oder diesen bildet, wobei der Schwenkeinsatz (22) gegenüber der Schwenkaufnahme (20) um eine quer zur Mittelachse (28) des Grundgehäuses (18) verlaufende Schwenkachse verschwenkbar angeordnet ist, und wobei der Schwenkeinsatz (22) mittels der Festsetzmittel (30) am Grundgehäuse (18) festgesetzt ist.

3. Spanneinheit (10) nach Anspruch 2, **dadurch gekennzeichnet, dass** die Schwenkaufnahme (20) einen kegelstumpfartige Aufnahmeabschnitt (24) und dass der Schwenkeinsatz (22) einen in die Schwenkaufnahme (20) einsetzbaren Schwenkabschnitt (26) aufweist.

4. Spanneinheit (10) nach Anspruch 2 oder 3, **dadurch gekennzeichnet, dass** die Festsetzmittel einen den Schwenkeinsatz (22) und die Schwenkaufnahme (20) durchgreifenden Festsetzstift (30) mit einem Kopf (32) aufweisen, dass der Schwenkeinsatz (22) einen Boden mit einer Aussparung (36), durch die der Festsetzstift (30) hindurch ragt und eine Kopfaufnahme (40) für den Kopf (32) aufweist, wobei der Festsetzstift (30) in der Verrieglungslage den Schwenkeinsatz (22) gegen die Schwenkaufnahme (20) festsetzt.

5. Spanneinheit (10) nach Anspruch 4, **dadurch gekennzeichnet, dass** der Kopf (32) als Senk- oder Senkrundkopf ausgebildet ist und/oder dass die Kopfaufnahme (40) eine zum Kopf komplementäre Anlagefläche aufweist.

6. Spanneinheit (10) nach Anspruch 4 oder 5, **dadurch gekennzeichnet, dass** der Festsetzstift (30) an seinem dem Kopf (32) abgewandten Ende einen sich in radialer Richtung erstreckenden Flanschabschnitt (34) aufweist, der mit im Grundgehäuse (18) in radialer Richtung verlagerbaren Verriegelungselemente (44) derart zusammenwirkt, dass beim Verlagern der Verriegelungselemente (44) in eine Festsetzposition der Festsetzstift (30) in axialer Richtung beaufschlagt wird und dadurch der Schwenkeinsatz (22) festgesetzt wird.

7. Spanneinheit (10) nach Anspruch 6, **dadurch gekennzeichnet, dass** die Verriegelungselemente (44) als Spannschieber ausgebildet sind, dass die Spannschieber auf der radial inneren Seite Einzugsschrägen (48) aufweisen, dass zwischen den Einzugsschrägen (48) und dem Flanschabschnitt (34) ein um den Festsetzstift (30) angeordnetes Ringelement (52) mit zu den Einzugsschrägen (48) komplementär verlaufenden Gegenschrägen (50) vorgesehen ist, und dass das Ringelement (52) eine senkrecht zur Mittellängsachse (28) des Grundgehäuses (18) verlaufende Anlagefläche (56) aufweist, die mit dem Flanschabschnitt (34) zusammen wirkt.

8. Spanneinheit (10) nach einem der Ansprüche 2 bis 7, **dadurch gekennzeichnet, dass** im Grundgehäuse (18) ein Kolbenraum und ein im Kolbenraum verlagerbarer, wenigstens einseitig druckbeaufschlagbarer Kolben (46) vorgesehen ist, wobei der Kolben (46) über eine Schrägführung mit den Verriegelungselementen (44) derart gekoppelt ist, dass beim axialen Verstellen des Kolbens (46) die Verriegelungselemente (44) in radialer Richtung verlagert werden.

9. Spanneinheit (10) nach einem der vorhergehenden Ansprüche, **dadurch gekennzeichnet, dass** im Spannmodul (12) oder in der Schwenkaufnahme (20) ein axialer Höhenausgleich vorgesehen ist.

10. Spanneinheit (10) nach einem der Ansprüche 2 bis 9, **dadurch gekennzeichnet, dass** das Grundgehäuse (18) eine senkrecht zu dessen Mittellängsachse (28) verlaufende Auflage (54) für die Schwenkaufnahme (20) derart aufweist, dass die Schwenkaufnahme gegenüber dem Grundgehäuse (18) in radialer Richtung verlagerbar ist und mit den Festsetzmitteln (30) am Grundgehäuse (18) festsetzbar ist.

11. Spannsystem mit zwei oder mehreren Spanneinheiten, die jeweils eine Spannaufnahme (16) und in eine Verriegelungslage verlagerbare Spannmittel aufweisen, wobei mit der jeweiligen Spannaufnahme (16) zusammenwirkende Spannelemente in der Verrieglungslage von den Spannmitteln in die jeweilige Spannaufnahme (16) gezogen und dort verriegelt werden, **dadurch gekennzeichnet, dass** eine Spanneinheit als starre Spanneinheit ausgebildet ist, die keinen Ausgleich in eine radiale Richtung oder in eine Schwenklage zulässt, und dass wenigstens eine Spanneinheit (10) als Spanneinheit nach einem der vorhergehenden Ansprüche ausgebildet ist.

## Claims

1. Clamping unit (10) having a clamping module (12), the clamping module (12) comprising a clamping seat (16) and clamping means movable in a locking position, wherein, in the locking position, a clamping element co-operating with the clamping seat (16) is pulled into the clamping seat (16) by the clamping means and is locked there, **characterized in that** a swivel insert (22) is provided which allows swiveling of the clamping module around a swiveling axis extending crosswise to the center axis (28) of the swiveling insert (22), and that detachable fixing means (30) are provided which are movable into a fixing position in which the swiveling insert (22) is fixed.

2. Clamping unit (10) as claimed in claim 1, **characterized in that** a compensation unit (14) having a base housing (18), a swivel seat (20) and the swivel insert (22) is provided, wherein the clamping module (12) can be arranged on the swivel insert (22) or configures the swivel insert, wherein the swivel insert (22) is arranged relative to the swivel seat (20) swiveling around a swiveling axis extending crosswise to the center axis (28) of the base housing (18), and wherein the swivel insert (22) is fixed on the base housing (18) by means of the fixing means (30).

3. Clamping unit (10) as claimed in claim 2, **characterized in that** the swivel seat (20) comprises a frustoconical seat section (24) and that the swivel insert (22) comprises a swivel section (26) which can be put into the swivel seat (20).

4. Clamping unit (10) as claimed in claim 2 or 3, **characterized in that** the fixing means comprises a fixing pin (30) with a head (32), which pin passes through the swivel insert (22) and the swivel seat (20), that the swivel insert (22) comprises a bottom with a recess (36) through which the fixing pin (30) projects, and a head seat (40) for the head (32), wherein the fixing pin (30) fixes the swivel insert (22) against the swivel seat (20) in the fixing position.

5. Clamping unit (10) as claimed in claim 4, **characterized in that** the head (32) is formed as a countersunk or raised countersunk head and/or that the head seat (40) comprises an abutment face complementary to the head.

6. Clamping unit (10) as claimed in claim 4 or 5, **characterized in that** the fixing pin (30) comprises a flange portion (34) extending in a radial direction on its end opposite to the head (32), which flange cooperates with locking elements (44) movable in the base housing (18) in radial direction in such a way that, when moving the locking elements (44) into a fixing position, the fixing pin (30) is acted upon in axial direction such that the swiveling insert (22) is fixed.

7. Clamping unit (10) as claimed in claim 6, **characterized in that** the locking elements (44) are configured as clamping sliders, that the clamping sliders have draw-in inclinations (48) on their radially inner side, that between the draw-in inclinations (48) and the flange portion (34) there is provided an annular element (52) arranged around the fixing pin (30) and having counter inclinations (50) extending complementary to the draw-in inclinations (48), and that the annular element (52) comprises an abutment face (56) extending orthogonally to the longitudinal center axis (28) of the base housing (18), which abutment face cooperates with the flange portion (34).

8. Clamping unit as claimed in one of claims 2 to 7, **characterized in that** in the base housing (18) a piston space and a piston (46) movable in the piston space and being pressurized at least on one side are provided, wherein the piston (46) is coupled to the locking elements (44) via a guide slope in such a way that the locking elements (44) are moved in a radial direction when the piston (46) is axially adjusted.

9. Clamping unit (10) as claimed in one of the preceding claims, **characterized in that** in the clamping module (12) or in the swivel seat (20) an axial height compensation is provided.

10. Clamping unit (10) as claimed in one of claims 2 to 9, **characterized in that** the base housing (18) comprises a seat (54) for the swivel seat (20) extending orthogonally to its longitudinal center axis (28) in such a way that the swivel seat is movable with respect to the base housing (18) in a radial direction and can be fixed by means of the fixing means (30) on the base housing (18).

11. Clamping system comprising two or more clamping units, each having a clamping seat (16) and clamping means which are movable into a fixing position, wherein, in the locking position, clamping elements co-operating with the respective clamping seat (16) are pulled into the respective clamping seat (16) by the clamping means and are locked there, **characterized in that** one clamping unit is configured as a rigid clamping unit which allows no compensation in a radial direction or in a rotated position, and that at least one clamping unit (10) is configured as a clamping unit according to one of the preceding claims.

## Revendications

1. Unité de serrage (10) avec un module de serrage (12), dans laquelle le module de serrage (12) présente un logement de serrage (16) et des moyens de serrage déplaçables dans une position de verrouillage,
dans laquelle un élément de serrage coopérant avec le logement de serrage (16) est tiré dans la position de verrouillage par les moyens de serrage dans le logement de serrage (16) et y est verrouillé, **caractérisée en ce qu'**un insert pivotant (22) est prévu, qui permet un pivotement du module de serrage autour d'un axe de pivotement s'étendant transversalement par rapport à l'axe médian (28) de l'insert pivotant (22) et que des moyens de fixation (30) libérables sont prévus, qui peuvent être déplacés dans une position de fixation dans laquelle l'insert pivotant (22) est fixé.

2. Unité de serrage (10) selon la revendication 1, **caractérisée en ce qu'**une unité de compensation (14) est pourvue d'un boîtier de base (18), d'un logement pivotant (20) et de l'insert pivotant (22), dans laquelle le module de serrage (12) peut être disposé sur l'insert pivotant (22) ou forme celui-ci, dans laquelle l'insert pivotant (22) est disposé de manière à pouvoir pivoter par rapport au logement pivotant (20) autour d'un axe de pivotement s'étendant transversalement à l'axe médian (28) du boîtier de base (18), et dans laquelle l'insert pivotant (22) est fixé sur le boîtier de base (18) au moyen des moyens de fixation (30).

3. Unité de serrage (10) selon la revendication 2, **caractérisée en ce que** le logement pivotant (20) présente une partie de logement (24) tronconique et que l'insert pivotant (22) présente une partie pivotante (26) pouvant être insérée dans le logement pivotant (20) .

4. Unité de serrage (10) selon la revendication 2 ou 3, **caractérisée en ce que** les moyens de fixation présentent une tige de fixation (30), traversant l'insert pivotant (22) et le logement pivotant (20), avec une tête (32), que l'insert pivotant (22) présente un fond avec un évidement (36), par lequel la tige de fixation (30) fait saillie et présente un logement de tête (40) pour la tête (32), dans laquelle la tige de fixation (30) fixe l'insert pivotant (22) contre le logement pivotant (20) dans la position de verrouillage.

5. Unité de serrage (10) selon la revendication 4, **caractérisée en ce que** la tête (32) est réalisée sous la forme d'une tête fraisée ou ronde fraisée et/ou que le logement de tête (40) présente une surface d'appui complémentaire de la tête.

6. Unité de serrage (10) selon la revendication 4 ou 5, **caractérisée en ce que** la tige de fixation (30) présente à son extrémité opposée à la tête (32) une partie bride (34) s'étendant dans la direction radiale, qui coopère avec des éléments de verrouillage (44) déplaçables dans la direction radiale dans le boîtier de base (18), de telle sorte que, lors du déplacement des éléments de verrouillage (44) dans une position de fixation, la tige de fixation (30) est sollicitée dans la direction axiale et l'insert pivotant (22) est ainsi fixé.

7. Unité de serrage (10) selon la revendication 6, **caractérisée en ce que** les éléments de verrouillage (44) sont réalisés sous la forme de coulisseaux de serrage, que les coulisseaux de serrage présentent sur la face radialement intérieure des chanfreins d'insertion (48), que, entre les chanfreins d'insertion (48) et la partie bride (34), un élément annulaire (52) disposé autour de la tige de fixation (30) est pourvu de chanfreins complémentaires (50) s'étendant de manière complémentaire par rapport aux chanfreins d'insertion (48), et que l'élément annulaire (52) présente une surface d'appui (56), s'étendant perpendiculairement à l'axe longitudinal médian (28) du boîtier de base (18), qui coopère avec la partie bride (34) .

8. Unité de serrage (10) selon l'une quelconque des revendications 2 à 7, **caractérisée en ce qu'**une chambre de piston et un piston (46) pouvant être sollicité en pression au moins unilatéralement, déplaçable dans la chambre de piston, sont prévus dans le boîtier de base (18), dans laquelle le piston (46) est accouplé aux éléments de verrouillage (44) par l'intermédiaire d'un guidage oblique, de telle sorte que, lors du déplacement axial du piston (46), les éléments de verrouillage (44) sont déplacés dans la direction radiale.

9. Unité de serrage (10) selon l'une quelconque des revendications précédentes, **caractérisée en ce qu'**une compensation de hauteur axiale est prévue dans le module de serrage (12) ou dans le logement pivotant (20) .

10. Unité de serrage (10) selon l'une quelconque des revendications 2 à 9, **caractérisée en ce que** le boîtier de base (18) présente un appui (54) s'étendant perpendiculairement à l'axe longitudinal médian (28) de celui-ci pour le logement pivotant (20), de telle sorte que le logement pivotant est déplaçable dans la direction radiale par rapport au boîtier de base (18) et peut être fixé sur le boîtier de base (18) avec les moyens de fixation (30).

11. Système de serrage avec deux unités de serrage ou plus, qui présentent respectivement un logement de serrage (16) et des moyens de serrage déplaçables dans une position de verrouillage, dans lequel des éléments de serrage coopérant avec le logement de serrage (16) respectif sont tirés dans la position de verrouillage par les moyens de serrage dans le logement de serrage (16) respectif et y sont verrouillés, **caractérisé en ce qu'**une unité de serrage est réalisée sous la forme d'une unité de serrage fixe, qui n'admet pas de compensation dans une direction radiale ou dans une position de pivotement, et qu'au moins une unité de serrage (10) est réalisée sous la forme d'une unité de serrage selon l'une quelconque des revendications précédentes.
